# EUROPÄISCHE PATENTSCHRIFT

(11) **EP 0 616 402 B1**
(45) Veröffentlichungstag und Bekanntmachung des Hinweises auf die Patenterteilung: **27.11.1996**
(21) Anmeldenummer: 94103345.8
(22) Anmeldetag: 05.03.1994
(51) Int. Cl.: H02B 1/20

(54) **Sammelschienenblock zur phasenweisen Verbindung gleichphasiger Schalterpole in einer elektrischen Installationsverteilung**
Bus bar assembly for phase-wise connection of switch poles of the same phase in an electric distribution installation
Ensemble de barres de distribution pour la connection par phase de pôles d'interrupteur avec le même phase dans une installation de distribution électrique

(30) Priorität: 13.03.1993 DE 4308025
(43) Veröffentlichungstag der Anmeldung: 21.09.1994
(73) Patentinhaber: ABB PATENT GmbH, D-68309 Mannheim (DE)
(72) Erfinder: Leible, Erwin, D-69434 Hirschberg (DE)
(74) Vertreter: Rupprecht, Klaus, Dipl.-Ing.

(56) Entgegenhaltungen:
- DE-U- 7 723 993
- DE-U- 8 700 153
- FR-A- 2 453 521

## Beschreibung

Die Erfindung betrifft einen Sammelschienenblock gemäß dem Oberbegriff des Anspruches 1.

Ein Sammelschienenblock der eingangs genannten Art ist beispielsweise aus dem DE-GM 87 00 153 bekannt geworden. Dabei sind die einzelnen Phasenschienen mit Laschen versehen, die so abgewinkelt sind, daß die freien Enden der Laschen in einer Ebene liegen. Dabei können die Laschen aller Sammelschienen senkrecht zu diesen abgewinkelt sein, oder die Laschen verlaufen parallel zu den Trennwänden des Mehrkammerisolierprofils, wobei die mittlere Sammelschiene gerade Laschen und die beiden äußeren Sammelschienen etwa Z-förmig abgekröpfte Laschen aufweisen, dergestalt, daß die Enden dieser abgekröpften Laschen in der durch die Laschen der mittleren Sammelschiene aufgespannten Ebene liegen. Die freien Enden der Laschen sind gabelförmig ausgebildet, damit sie unter die Anschlußklemmen eines Schaltgerätes geklemmt werden können.

Die die mittlere Kammer begrenzenden Trennwände besitzen Anformungen, die die Trennwände in Richtung der benachbarten Endwände überragen; durch diese Anformungen werden die Sammelschienen gegen die Innenflächen der Endwände gedrückt, so daß der Abstand der Sammelschienen mindestens die doppelte Dicke der Sammelschienen selbst beträgt. Aufgrund der konstruktiven Ausgestaltung der Anformungen befinden sich zwischen den Sammelschienen und den Trennwänden Hohlräume.

Wenn derartige Sammelschienen auch in einem Feuchtraumbereich eingesetzt werden, besteht die Gefahr, daß durch in diesem Bereich entstehendes Tropfwasser Überschläge entstehen, die zum Ausfall der Anlage führen. Bei den bekannten Stromsammelschienen, bei denen die Kammern alle in eine Richtung geöffnet sind, kann ins Innere jeder Kammer Tropf- oder Kondenswasser einlaufen und dadurch einen Stromfluß zwischen den Phasenschienen erzeugen.

Aufgabe der Erfindung ist es, einen Sammelschienenblock der eingangs genannten Art zu schaffen, bei dem die Gefahr von Überschlägen bei Tropf- oder Kondenswasser vermieden ist.

Diese Aufgabe wird erfindungsgemäß gelöst durch die kennzeichnenden Merkmale des Anspruches 1.

Im Gegensatz zu den bekannten Sammelschienenblöcken, bei denen alle Sammelschienen von einer Richtung aus in das Mehrkammerisolierprofil eingedrückt oder eingeschoben werden, werden bei dem erfindungsgemäßen Sammelschienenblock die beiden außen liegenden Sammelschienen von oben und die mittlere Sammelschiene von unten in die jeweiligen Kammern eingedrückt, wobei die mittlere Sammelschiene mit ihren Laschen durch die Schlitze im zugehörigen Kammerboden hindurchgreift.

Durch die erfindungsgemäße Ausgestaltung wird die Kriechstrecke zwischen den einzelnen Sammelschienen vergrößert, in jedem Fall aber die Kriechstrecke zwischen jeweils benachbarten Sammelschienen und darüberhinaus wegen der oben geschlossenen zweiten Kammer die Kriechstrecken zwischen den Sammelschienen, die sich in den von oben zu bestückenden Kammern befinden.

Zur Definierung ist zu sagen, daß "oben offen" diejenigen Kammern sind, deren Sammelschienen mit ihren Laschen aus der offenen Seite herausragen, während "unten offen" diejenige Kammer ist, deren Sammelschiene mit ihren Laschen durch die Schlitze im zugehörigen Kammerboden hindurchgeschoben wird.

Eine besonders vorteilhafte Ausgestaltung ist dem Anspruch 2 zu entnehmen. Danach sind auf den aufeinanderzuweisenden Innenflächen der Trennwände der zweiten Kammer abstandshaltende Leisten vorgesehen, die seitlich die Sammelschienen berühren. Bei der erfindungsgemäßen Ausgestaltung ist etwa im mittleren Bereich und an der Endkante jeweils eine Leiste vorgesehen, die seitlich gegen die Sammelschienen drücken und somit die Sammelschienen etwa in mittigem Abstand zwischen den Innenflächen der Trennwände halten.

Dabei können am freien Rand jeder Trennwand der zweiten Kammer die Bodenabschnitte der ersten Kammern anschließen.

Die Bodenabschnitte der zweiten Kammer sind etwa V-förmig mit schräg zu den Trennwänden verlaufenden Bodenbereichen ausgebildet; in diesem Fall sind die Leisten parallel zu den V-förmigen Bodenbereichen ausgerichtet.

Die V-Form des Bodenabschnittes dient der besseren Einfädelung und Zuführung der Laschen zu den Schlitzen. Wenn nämlich die Laschen auf die Innenfläche des V-förmigen Bodenabschnittes aufgesetzt werden und dabei die Schlitze nicht exakt treffen, werden sie von der Schräge der V-Form des Bodenabschnittes zu den Schlitzen hin geführt, so daß sie zu den Schlitzen hin gleiten können. Wenn der Bodenabschnitt kreisförmig oder gerade ausgebildet ist, dann sind die Leisten gleichwohl unter einem Winkel zu den Trennwänden angeordnet, wobei der Winkel zwischen der Trennwand und der bodenseitigen Fläche jeder Leiste ein spitzer Winkel darstellt. Dadurch besitzen die Leisten eine zur offenen Seite der zweiten Kammer hin offene V-Form, die für die Einführung der Leiste in die Kammer hilfreich ist.

Zum verbesserten Einführen der Sammelschienen in die ersten Kammern sind die Endwände der ersten Kammern in ihrem Endbereich ebenfalls aufgebogen, so daß sich auch hier eine V-Form bildet.

Zur Fixierung der Sammelschienen im Inneren der ersten Kammern sind etwa sägezahnförmige Rastleisten vorgesehen, welche hinter an den Sammelschienen angeformte Warzen greifen.

Weitere vorteilhafte Ausgestaltungen und Verbesserungen der Erfindung ergeben sich aus den weiteren Unteransprüchen.

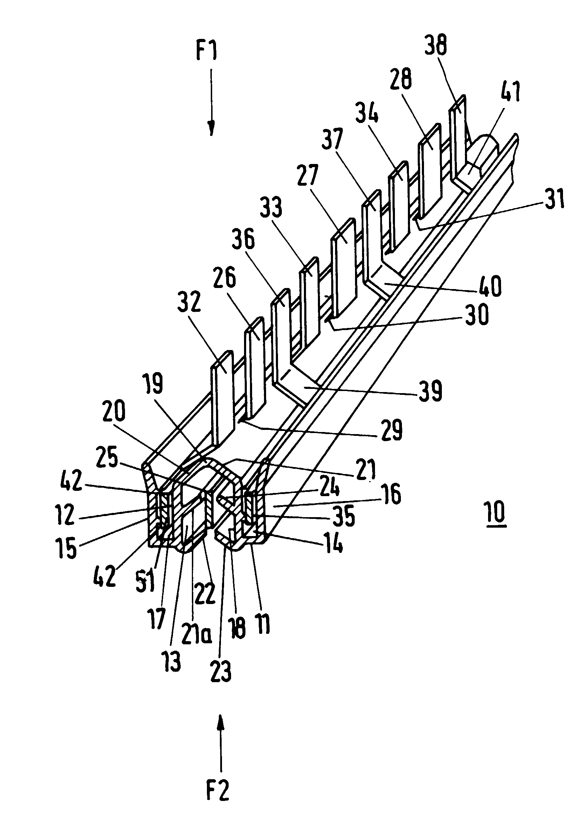

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigt die einzige eine perspektivische Ansicht eines Sammelschienenblockes, mit aufgeschnittener Stirnfläche.

Der Phasenschienenblock 10 der einzigen Figur besitzt ein Mehrkammerprofil 11 mit drei nebeneinander liegenden Kammern 12, 13 und 14. Die beiden Kammern 12 und 14, auch als erste Kammern bezeichnet, sind nach oben (in der Figur) offen und besitzen eine U-Profilform, deren der zweiten Kammer 13 abgewandte Schenkel die Außenwände 15 und 16 des Mehrkammerprofils 11 und deren der Kammer 13 zugewandte Schenkel 17 und 18 die Trennwände zu der Kammer 13 bilden. Die Schenkel 17 und 18 sind mittels eines V-förmigen Bodenabschnittes 19 (in der Zeichnung) nach oben hin abgeschlossen, wobei der Bodenabschnitt 19 zwei Bodenbereiche 20 und 21 besitzt, die V-förmig unter Einschluß eines stumpfen Winkels miteinander verbunden sind. An den aufeinanderzuweisenden Innenflächen der Schenkel 17 und 18 befinden sich Leisten 21a, 22 und 23, 24, die parallel zu den Bodenbereichen 20 und 21 verlaufen und mit den Innenflächen der Schenkel 17 und 18 mit ihrer dem Bodenabschnitt 19 zugewandten Seite einen spitzen Winkel bilden. Der Abstand der sich gegenüberliegenden Enden der Leisten 21a, 24; 22, 23 ist so bemessen, daß die Enden sich gegen die Außenfläche einer Sammelschiene 25 anlegen und diese in der Mitte der Kammer festhalten. An dieser Sammelschiene 25 sind die Laschen 26, 27, 28 angebracht, die gerade gebogen sind und sich in der durch die Sammelschiene 25 gebildeten Ebene befinden. Damit die Laschen 26 bis 28 durch den Bodenabschnitt 19 hindurchgreifen, befinden sich im Bodenabschnitt 19 in der Spitze der V-Form Schlitze 29, 30, 31, wobei der Abstand dem Abstand dreier nebeneinander angeordneter Schalterpole entspricht.

In der Kammer 12 befindet sich eine weitere Sammelschiene 31, deren Laschen 32, 33 und 34 Z-förmig abgekröpft sind, wobei die freien Enden der Laschen in der durch die Laschen 26 bis 28 aufgespannten Ebene liegen. In der Kammer 14 befindet sich eine dritte Sammelschiene 35, deren Laschen 36, 37 und 38 ebenfalls Z-förmig abgekröpft sind; die freien Enden der Laschen 36 bis 38 befindet sich ebenfalls in der durch die Laschen 26 bis 28 bzw. 32 bis 34 aufgespannten Ebene. Mit der Z-Form wird der Abstand der Sammelschienen 51 bzw. 35 von der besagten Ebene überbrückt und, wie bei den Laschen 36 bis 38 ersichtlich, ist der Zwischensteg 39, 40 und 41 an den Laschen der Schräge des Bodenbereiches 21 angepaßt; dies gilt natürlich auch für die Zwischenstege der Laschen 32 bis 34; diese sind der Schräge des Bodenbereiches 20 angepaßt.

An den Innenflächen der Trennwände 15, 16 sowie der Schenkel 17 und 18 befinden sich sägezahnförmige Leisten 42 (nur diejenigen an der Endwand 15 sind bezeichnet), die die Sammelschienen 51 bzw. 35 in ihrer Position innerhalb der Kammern 12 und 14 verrastend festhalten.

Man erkennt aus der einzigen Figur, daß die offene Seite der ersten Kammern 12 und 14 in die eine Richtung und die offene Seite der dazwischenliegenden zweiten Kammer 13 in die entgegengesetzte Richtung geöffnet sind, so daß die Sammelschienen 51 und 35 in die Kammern 12 und 14 in Pfeilrichtung F₁ und die Sammelschiene 25 in die Kammer 13 in Pfeilrichtung F₂ eingeschoben werden. Hierdurch wird zum einen erreicht, daß die Kriechstrecke zwischen den Sammelschienen 31 und 35 über den Bodenabschnitt 19 sowie die Kriechstrecken zwischen den Sammelschienen 51, 25 bzw. 25, 35 im Vergleich zu den bekannten Sammelschienenblöcken deutlich erhöht ist. Damit kann die erfindungsgemäße Sammelschiene auch in Feuchträumen eingesetzt werden, weil auch bei Vorhandensein von Tropf- und Kondenswasser Kurzschluß- und/oder Kriechströme zwischen den Sammelschienen 51, 25, 35 nicht fließen können.

Nachzutragen ist noch, daß alle Laschen aller Sammelschienen in der gleichen Ebene und ihre Enden in einer Linie, d. h. in gleichem Abstand von der Sammelschiene (25) in der mittleren Kammer liegen.

## Patentansprüche

1. Sammelschienenblock zur phasenweisen Verbindung gleichphasiger Schalterpole von Schaltgeräten in einer elektrischen Installationsverteilung, mit einem Mehrkammerisolierprofil, in dessen im Querschnitt U-förmige Kammern (12, 13, 14) je eine Stromsammelschiene (25, 35, 51) eingesetzt ist, die Laschen (26, 27, 28) aufweist, die aus dem Mehrkammerisolierprofil herausragen und an die Schalterpole anschließbar sind, wobei die Trennwände zwischen den Kammern (12, 13, 14) so ausgebildet sind, daß sie die Stromsammelschienen (25, 35, 51) auf Abstand halten, dadurch gekennzeichnet, daß je zwei in einer senkrecht zur Längserstreckung des Sammelschienenblockes verlaufenden ersten Richtung offene erste Kammern (12, 14) eine in entgegengesetzter zweiter Richtung offene zweite Kammer (13) zwischen sich nehmen und daß die zweite Kammer (13) an ihrem in die erste Richtung weisenden Kammerboden Schlitze (29, 30, 31) aufweist, durch die Laschen (26, 27, 28) der in die zweite Kammer (13) eingeführten Sammelschiene (25) hindurchgreifen.

2. Sammelschienenblock nach Anspruch 1, dadurch gekennzeichnet, daß an den aufeinanderzuweisenden Innenflächen der Schenkel (17, 18) der zweiten Kammer je wenigstens eine abstandshaltende Leiste (21a, 22; 23, 24) vorgesehen sind, die seitlich die Sammelschiene (25) berühren und gegen sie drücken.

3. Sammelschienenblock nach Anspruch 1 oder 2, dadurch gekennzeichnet, daß am freien Rand jedes Schenkels (17, 18) der zweiten Kammer (13) die Bodenabschnitte der ersten Kammern (12, 14) anschließen.

4. Sammelschienenblock nach einem der vorherigen Ansprüche, dadurch gekennzeichnet, daß je eine abstandshaltende Leiste (22, 23) am freien Ende jedes Schenkels (17, 18), etwa den Bodenabschnitt der ersten Kammern (12, 14) verlängernd, angeformt ist.

5. Sammelschienenblock nach Anspruch 2 oder 4, dadurch gekennzeichnet, daß die abstandshaltenden Leisten (21a, 22; 23, 24) mit der benachbarten Innenfläche einen zum Bodenabschnitt (19) hin offenen, spitzen Winkel bilden.

6. Sammelschienenblock nach einem der vorherigen Ansprüche, dadurch gekennzeichnet, daß der Bodenabschnitt (19) der zweiten Kammer (13) V-förmig mit unter einem stumpfen Winkel schräg zu den Schenkeln (17, 18) verlaufenden Bodenbereichen (20, 21) ausgebildet ist.

7. Sammelschienenblock nach Anspruch 6, dadurch gekennzeichnet, daß die Schlitze (29, 30, 31) in der Spitze der V-Form angeordnet sind.

8. Sammelschienenblock nach Anspruch 6 oder 7, dadurch gekennzeichnet, daß die Leisten (21a, 22; 23, 24) parallel zu den V-förmigen Bodenbereichen (20, 21) verlaufen.

9. Sammelschienenblock nach einem der vorherigen Ansprüche, dadurch gekennzeichnet, daß die freien Enden der Endwände (15, 16) der ersten Kammern (12, 14) miteinander eine V-Form und sich dabei erweiternd ausgebildet sind.

## Claims

1. Busbar block for connecting breaker terminals of the same phase of switching devices phase-by-phase in an electrical distribution board, comprising a multi-chamber insulating section, in the cross-sectionally U-shaped chambers (12, 13, 14) of which a power busbar (25, 35, 51) is in each case inserted which exhibits lugs (26, 27, 28) which protrude from the multi-chamber insulating section and can be connected to the breaker terminals, the partitions between the chambers (12, 13, 14) being constructed in such a manner that they keep the power busbars (25, 35, 51) spaced apart, characterized in that in each case two first chambers (12, 14), open in a first direction extending perpendicularly to the longitudinal extent of the busbar block, take between themselves a second chamber (13) open in the opposite second direction, and in that the second chamber (13) exhibits at its chamber bottom pointing in the first direction slots (29, 30, 31) through which lugs (26, 27, 28) of the busbar (25) inserted into the second chamber (13) reach.

2. Busbar block according to Claim 1, characterized in that at the inside surfaces, pointing towards one another, of the legs (17, 18) of the second chamber in each case there is provided at least one spacing strip (21a, 22; 23, 24), which are laterally in contact with the busbar (25) and press against it.

3. Busbar block according to Claim 1 or 2, characterized in that the bottom sections of the first chambers (12, 14) adjoin the free edge of each leg (17, 18) of the second chamber (13).

4. Busbar block according to one of the preceding claims, characterized in that in each case one spacing strip (22, 23) is moulded on the free end of each leg (17, 18), approximately extending the bottom section of the first chambers (12, 14).

5. Busbar block according to Claim 2 or 4, characterized in that the spacing strips (21a, 22; 23, 24) form an acute angle, which is open towards the bottom section (19), with the adjacent inside surface.

6. Busbar block according to one of the preceding claims, characterized in that the bottom section (19) of the second chamber (13) is constructed to be V-shaped with bottom areas (20, 21) extending at an obtuse angle obliquely to the legs (17, 18).

7. Busbar block according to Claim 6, characterized in that the slots (29, 30, 31) are arranged at the apex of the V shape.

8. Busbar block according to Claim 6 or 7, characterized in that the strips (21a, 22; 23, 24) extend in parallel with the V-shaped bottom areas (20, 21).

9. Busbar block according to one of the preceding claims, characterized in that the free ends of the end walls (15, 16) of the first chambers (12, 14) are constructed to form a V shape with one another and at the same time expanding.

## Revendications

1. Ensemble de barres de distribution pour la connexion par phase de pôles d'interrupteur avec la même phase dans une installation de distribution électrique, avec un profil à chambres multiples dans lequel une barre de distribution de courant (25, 25, 51) est placée respectivement dans les chambres de section transversale en forme de U, laquelle barre de distribution présente des lamelles (26, 27, 28) qui font saillie du profil d'isolation à chambres multiples et peuvent être connectées aux pôles de l'interrupteur, les parois de séparation entre les chambres (12, 13, 14) étant conformées de telle manière qu'elles maintiennent les barres de distribution du courant (25, 35, 51) à distance, caractérisé en ce que les deux premières chambres (12, 14) ouvertes dans une première direction s'étendant perpendiculairement à l'extension longitudinale de l'ensemble de barres de distribution encadrent à chaque fois une deuxième chambre (13) ouverte dans une deuxième direction opposée et en ce que la deuxième chambre (13) présente sur son fond tourné dans la première direction des fentes (29, 30, 31) que traversent les lamelles (26, 27, 28) de la barre de distribution (25) introduite dans la deuxième chambre (13).

2. Ensemble de barres de distribution selon la revendication 1, caractérisé en ce que sur les surfaces intérieures se faisant face des branches (17, 18) de la deuxième chambre, il est chaque fois prévu au moins un guide d'écartement (21a, 22: 23, 24) qui touche la barre de distribution (25) sur le côté et pousse contre celle-ci.

3. Ensemble de barres de distribution selon la revendication 1 ou 2, caractérisé en ce que les sections de fond des premières chambres (12, 14) sont jointives avec le bord libre de chaque branche (17, 18) de la deuxième chambre (13).

4. Ensemble de barres de distribution selon une des revendications précédentes, caractérisé en ce qu'un guide d'écartement (22, 23) est formé à chaque fois sur l'extrémité libre de chaque branche (17, 18), allongeant sensiblement la section de fond des premières chambres (12, 14).

5. Ensemble de barres de distribution selon la revendication 2 ou 4, caractérisé en ce que les guides d'écartement (21a, 22; 23, 24) forment avec les surfaces intérieures voisines un angle aigu ouvert en direction de la section de fond (19).

6. Ensemble de barres de distribution selon une des revendications précédentes, caractérisé en ce que la section de fond (19) de la deuxième chambre (13) forme un V à angle obtus avec les zones de fond (20, 21) s'étendant obliquement aux branches (17, 18).

7. Ensemble de barres de distribution selon la revendication 6, caractérisé en ce que les fentes (29, 30, 31) sont disposées au sommet de la forme en V.

8. Ensemble de barres de distribution selon la revendication 6 ou 7, caractérisé en ce que les guides (21a, 22; 23, 24) s'étendent parallèlement aux zones de fond (20, 21) formant un V.

9. Ensemble de barres de distribution selon une des revendications précédentes, caractérisé en ce que les extrémités libres des parois terminales (15, 16) des premières chambres (12, 14) forment entre elles un V et sont ainsi formées de façon à s'évaser.
